# EUROPÄISCHE PATENTSCHRIFT

(11) **EP 0 713 013 B1**
(45) Veröffentlichungstag und Bekanntmachung des Hinweises auf die Patenterteilung: **10.06.1998**
(21) Anmeldenummer: 95117183.4
(22) Anmeldetag: 31.10.1995
(51) Int. Cl.: F16B 13/12

(54) **Kunststoffdübel**
Plastic dowel
Cheville en matière plastique

(30) Priorität: 18.11.1994 DE 4441179
(43) Veröffentlichungstag der Anmeldung: 22.05.1996
(73) Patentinhaber: Tox-Dübel-Werk R.W. Heckhausen GmbH & Co. KG, D-78351 Bodman-Ludwigshafen (DE)
(72) Erfinder: Leible, Dieter, D-78234 Engen-Bittelbrunn (DE)
(74) Vertreter: Koch, Günther, Dipl.-Ing.

(56) Entgegenhaltungen:
- CH-A- 679 053
- DE-A- 1 500 765
- DE-A- 2 900 698
- DE-B- 2 254 602
- GB-A- 780 878
- US-A- 3 172 603

## Beschreibung

Die Erfindung bezieht sich auf einen Kunststoffdübel der im Oberbegriff des Patentanspruchs 1 angegebenen Gattung. Ein derartiger Dübel ist aus der DE-A-2 254 602 bekannt. Bei diesem bekannten Dübel wird beim Eindrehen der Schraube im Dübelfuß ein Gewinde eingeschnitten, welches für die erreichbare axiale Schubkraft verantwortlich ist. Diese erreichbare axiale Schubkraft hängt außer von der Beschaffenheit des eingeschnittenen Gewindes und von der Gewindetiefe im hohen Maße von der Materialbeschaffenheit des Dübels ab. Die üblicherweise für Kunststoffdübel aus Kostengründen benutzten Materialien besitzen nur eine begrenzte Festigkeit, und es kann vorkommen, daß beim Einschneiden der Schraube das Gewinde infolge der axialen Beanspruchung ausreißt, wodurch die radiale Spreizkraft oder Knickkraft der Segmente verlorengeht. Diese Gefahr des Ausreißens des Gewindes wäre infolge der Materialbeschaffenheit der üblichen Dübel auch dann gegeben, wenn bei der Dübelherstellung im Dübelfuß bereits ein Innengewinde eingeschnitten würde.

Die Gefahr des Ausreißens des Gewindes besteht besonders dann, wenn der Dübel insgesamt oder der Dübelfuß in einem Bohrloch zu liegen kommt und die axiale Verschiebung des Dübelfußes im Dübelloch einen erhöhten Reibungswiderstand ergibt und die Segmente sich an der Dübellochwandung verkrallen müssen. Aber auch bei Verwendung als Knickdübel besteht die Gefahr des Ausreißens vor Ausknicken der Segmente, wonach die für die Verknotung wirksamen Kräfte eine relativ geringe Axialkraft erfordern und dann, wenn der Knickzustand einmal erreicht wurde, ein Ausreißen des Gewindes nicht mehr zu befürchten ist.

Es sind zwar für Spezialzwecke verwendbare Metalldübel mit Maschinengewinde bekannt, bei denen die Gefahr des Gewindeausreißens nicht besteht. Diese Metalldübel sind jedoch schon aus Kostengründen nicht universell anwendbar. Ebenso erscheint es unzweckmäßig, für universell einsetzbare Dübel Kunststoffe mit erhöhter Festigkeit zu benutzen, weil dies eine erhebliche Verteuerung in der Herstellung bedeuten würde und keine optimalen Spreiz- oder Knickfunktionen erreichbar wären.

Der Erfindung liegt daher die Aufgabe zugrunde, einen gattungsgemäßen Kunststoffdübel derart zu verbessern, daß das Gewinde im Dübelfuß eine erhöhte axiale Kraftübertragung ermöglicht, ohne daß die Gefahr des Ausreißens besteht, wobei der Dübel kostengünstig aus dem üblichen Kunststoffmaterial herstellbar und als Universaldübel einsetzbar ist und eine hohe Ausziehkraft gewährleistet.

Gelöst wird die gestellte Aufgabe durch die im Kennzeichnungsteil des Anspruchs 1 angegebenen Merkmale.

Der Einsatzkörper besteht aus einem Material höherer Festigkeit, beispielsweise aus Metall oder einem faservestärkten Kunstharz. Der Einsatzkörper kann auf einfachste Weise zusammen mit dem Dübel gespritzt werden, wobei der Einsatzkörper von einem Kern getragen wird. Der Einsatzkörper wird zweckmäßigerweise vor Umspritzen mit dem Dübelkörper mit dem Gewinde versehen, jedoch soll auch vorbehalten bleiben, das Gewinde später einzushneiden, nach dem der Einsatzkörper bereits im Dübelkörper verankert ist.

Der Einsatzkörper ist vorzugsweise mit äußeren, radialen und/oder axialen Rippen oder Vorsprüngen versehen, die sich in der Dübelmasse des Dübelfußes verankern und eine Trennung des Einsatzkörpers vom Dübelfuß bei Belastung verhindern.

Der Erfindung liegt weiter die Aufgabe zugrunde, den Dübel dadurch universeller anwendbar zu machen als dies bisher möglich war, und zwar derart, daß er in Verbindung mit Schrauben mit unterschiedlichem Gewinde benutzbar ist. Diese Aufgabe wird gemäß der Erfindung dadurch gelöst, daß in den Einsatzkörper mehr als ein Gewinde eingeformt oder eingeschnitten wird, beispielsweise ein Maschinengewinde zusammen mit einem Holzgewinde, einem Spanplattengewinde oder einem Blechschraubengewinde. Es hat sich gezeigt, daß bei entsprechender Durchmesserwahl wenigstens zwei unterschiedliche Innengewinde vorgesehen werden können, die in Verbindung mit den entsprechend wahlweise eingedrehten Schrauben eine hohe Ausziehkraft gewährleisten.

In gewissen Fällen kann ein noch besseres Zusammenwirken der beiden Gewinde mit entsprechenden Schrauben dann erreicht werden, wenn Teile der Innengewinde über aneinander anschliessende Wandabschnitte verteilt sind, derart, daß in beispielsweise drei Abschnitten das eine Gewinde und in drei benachbarten Abschnitten das andere Gewinde eingeformt ist. Diese Anordnung kann z.B. dann zweckmäßig sein, wenn die beiden einzusetzenden Schrauben selbstschneidend ausgebildet sind, so daß beim Eindrehen eine günstige Führung für das Einschneiden gewährleistet wird.

Gemäß einem bevorzugten Ausführungsbeispiel besteht der Einsatzkörper aus einer zylindrischen oder auch konisch geformten Hülse, die mit äußeren Vorsprüngen versehen ist, mit denen sie im Dübelfuß verankert ist. Stattdessen kann der Einsatzkörper jedoch auch aus einer oder mehreren Ringscheiben bestehen, die in koaxialer Anordnung im Dübelkörper eingefügt sind und an denen die eingedrehte Schraube mit ihrem Gewinde angreift.

Weitere Ausgestaltungen ergeben sich aus den Unteransprüchen.

Nachstehend werden Ausführungsbeispiele der Erfindung anhand der Zeichnung beschrieben. In der Zeichnung zeigen:
- Fig. 1: eine Seitenansicht eines erfindungsgemäß ausgebildeten Dübels;
- Fig. 2: eine axiale Ansicht des Dübels nach Fig. 1 von der Dübelhalsseite her betrachtet;
- Fig. 3: einen Schnitt des Dübels nach der Linie III-III gemäß Fig. 1;
- Fig. 4: in größerem Maßstab eine Schnittansicht des in Fig. 3 mit dem Kreis Z umschriebenen Teils;
- Fig. 5: in größerem Maßstab eine Schnittansicht des Einsatzkörpers.

Der in der Zeichnung dargestellte Dübel weist einen geschlossenen Dübelhals 10, einen mit Spreizsegmenten versehenen Dübelschaft 12 und einen geschlossenen Dübelfuß 14 auf. Der Dübelhals weist außen sich nach dem Dübelschaft 12 hin verjüngende Rippen 16 als Drehsicherung auf. Zwischen den Rippen 16 sind am oberen Ende des Dübelhalses vier radial nach außen vorstehende Flanschlappen 18 angeformt, die ein Kreuz bilden und sich bei der Durchsteckmontage nach oben umbiegen können. Der Dübelhals 10 weist ein Schraubeneinsatzloch 20 mit einem solchen Durchmesser auf, daß eine paßgerechte Holzschraube mit ihrem Schaft hindurchtreten kann, ohne eine Spreizwirkung auszuüben.

Der Dübelschaft 12 besteht aus einer Schraubenwendel 22 mit trapezförmigem Querschnitt, die auf einem Mantel aufgeformt ist, der zwischen den Gängen der Schraubenwendel 22 auf vier im gleichen Abstand angeordneten Mantellinien durchgehende oder teilweise durchgehende Schlitze 26 aufweist, durch die der Dübelschaft in vier Spreizsegmente unterteilt ist. Der Schaft 12 weist ein Durchgangsloch 28 mit einem solchen Durchmesser auf, daß eine angepaßte Schraube ein Aufspreizen der Segmente bewirken kann.

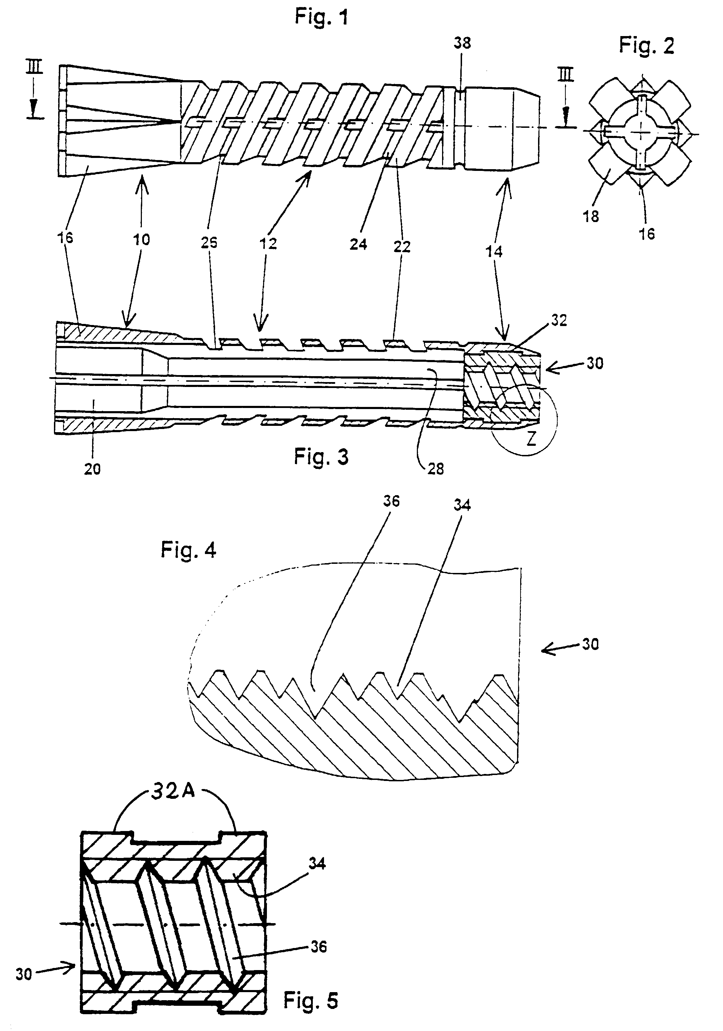

Der geschlossene und mit einer kegelstumpfförmigen Verjüngung am Ende versehene, geschlossene Dübelfuß 14 trägt innen einen eingespritzten oder auf andere Weise eingeformten Einsatzkörper 30 aus Metall oder einem Material, z.B. faserverstärktem Kunststoff, welches eine höhere Festigkeit besitzt als das Material des Kunststoffdübels. Der Einsatzkörper 30 besitzt zum Zwecke der axialen Verankerung im Dübelfuß eine in der Mitte umlaufende Ringrippe 32 (Fig. 3) oder zwei am Ende angeordnete Ringrippen 32A. (Fig 5) Außerdem können zur Drehsicherung axial verlaufende Rippen im Einsatzkörper vorgesehen werden, oder es können in den Ringrippen 32 oder 32A axiale Schlitze eingearbeitet sein, die eine Verankerung im Kunststoff des Dübels bewirken. Gemäß dem dargestellten Ausführungsbeispiel weist der Einsatzkörper ein Maschinengewinde 34 und ein Holzgewinde 36 auf, so daß wahlweise eine Holzschraube oder eine mit metrischem Gewinde versehene Maschinenschraube Verwendung finden kann, um eine axiale Verspannung zwischen Dübelfuß und Dübelhals unter Ausknickung der Segmente zu gewährleisten. Zur Unterstützung der Ausknickbewegung ist zwischen Dübelfuß und Dübelschaft eine außen umlaufende, als Gelenk wirkende Ringnut 38 vorgesehen. Anstelle der dargestellten Gewinde könnten auch Blechschraubengewinde oder Spanplatten-Schraubengewinde paarweise im Einsatzkörper angeordnet sein.

Der Einsatzkörper 30 verhindert mit hoher Sicherheit ein Ausreißen des Gewindes bei axialer Verspannung durch eine eingedrehte Schraube.

Der Einsatzkörper kann im Querschnitt rund oder polygonal, z.B. als Sechskant, ausgebildet sein, wobei die polygonale Ausbildung bereits eine gute Drehsicherung im eingespritzten Zustand gewährleistet. In beiden Fällen können jedoch axiale Rippen oder Nuten als Drehsicherung und/oder Ringrippen oder Ringnuten als Auszugssicherung vorgesehen sein.

Anstelle des in der Zeichnung dargestellten zylindrischen Einsatzkörpers können im axialen Abstand zueinander auch zwei oder mehrere Ringscheiben oder Zylinderringe in den Dübelfuß eingespritzt sein (in der Zeichnung nicht dargestellt), in die die Gewindegänge eingeschnitten sind oder die entsprechend dem Gewinde verwunden sind.

### Bezugszeichenliste

- 10: Dübelhals
- 12: Dübelschaft
- 14: Dübelfuß
- 16: Rippen
- 18: Flanschlappen
- 20: Schraubeneinsatzloch
- 22: Schraubenwendel
- 24: Mantel
- 26: Schlitze
- 28: Durchgangsloch
- 30: Einsatzkörper
- 32: Ringrippe
- 32A: Ringrippe
- 34: Machinengewinde
- 36: Holzgewinde
- 38: Ringnut

## Patentansprüche

1. Kunststoffdübel mit einem geschlossenen Dübelfuß (14), einem geschlossenen Dübelhals (10) und einem durch Längsschlitze (26) in Segmente unterteilten Dübelschaft (12) dazwischen, mit einem Schraubeneinsatzloch (20, 28) im Dübelhals und im Dübelschaft, bei dem in den Dübelfuß eine axial abgestützte Schraube eindrehbar ist, um den Dübelfuß (14) unter Ausknickung bzw. Aufspreizung der Segmente gegen den Dübelhals (10) zu verspannen,
dadurch gekennzeichnet, daß im Dübelfuß (14) ein Einsatzkörper (30) festgelegt ist, der ein Schraubgewinde (34; 36) zum Eindrehen der Schraube aufweist.

2. Kunststoffdübel nach Anspruch 1,
dadurch gekennzeichnet, daß der Einsatzkörper (30) aus einem gegenüber dem Kunststoffmaterial des Dübels widerstandsfähigeren Material besteht.

3. Kunststoffdübel nach den Ansprüchen 1 und 2,
dadurch gekennzeichnet, daß der Einsatzkörper (30) aus Metall besteht.

4. Kunststoffdübel nach den Ansprüchen 1 und 2,
dadurch gekennzeichnet, daß der Einsatzkörper (30) aus faserverstärktem Kunststoff besteht.

5. Kunststoffdübel nach einem der Ansprüche 1 bis 4,
dadurch gekennzeichnet, daß der Einsatzkörper bei der Dübelherstellung eingespritzt ist.

6. Kunststoffdübel nach einem der Ansprüche 1 bis 5,
dadurch gekennzeichnet, daß der Einsatzkörper (30) auf seiner Außenseite Verankerungsfortsätze (32) trägt.

7. Kunststoffdübel nach Anspruch 6,
dadurch gekennzeichnet, daß die Verankerungsfortsätze als in Umfangsrichtung verlaufende Rippen (32) ausgebildet sind, zwischen denen Umfangsnuten verlaufen.

8. Kunststoffdübel nach Anspruch 6,
dadurch gekennzeichnet, daß die Außenseite des Einsatzkörpers axial verlaufende Rippen als Drehsicherung trägt.

9. Kunststoffdübel nach einem der Ansprüche 1 bis 8,
dadurch gekennzeichnet, daß der Einsatzkörper (30) zylindrisch ausgebildet ist.

10. Kunststoffdübel nach einem der Ansprüche 1 bis 8,
dadurch gekennzeichnet, daß der Einsatzkörper konisch ausgebildet ist, wobei die Konusspitze nach dem Dübelhals weist.

11. Kunststoffdübel nach einem der Ansprüche 1 bis 8,
dadurch gekennzeichnet, daß der Einsatzkörper als Ringscheibe ausgebildet ist.

12. Kunststoffdübel nach Anspruch 11,
dadurch gekennzeichnet, daß mehrere Ringscheiben im axialen Abstand zueinander im Dübelfuß eingespritzt sind.

13. Kunststoffdübel nach Anspruch 1,
dadurch gekennzeichnet, daß der Einsatzkörper (30) übereinanderliegend zwei verschiedene Innengewinde (34, 36) aufweist.

14. Kunststoffdübel nach Anspruch 13,
dadurch gekennzeichnet, daß der Einsatzkörper (30) ein Maschinengewinde (34) und ein Spanplattengewinde aufweist.

15. Kunststoffdübel nach Anspruch 13,
dadurch gekennzeichnet, daß der Einsatzkörper (30) ein Maschinengewinde (34) und ein Holzschraubengewinde (36) aufweist.

16. Kunststoffdübel nach einem der Ansprüche 1 bis 8,
dadurch gekennzeichnet, daß der Einsatzkörper im Querschnitt polygonal ausgebildet ist.

## Claims

1. Plastics dowel having a closed dowel foot (14), a closed dowel neck (10) and between them a dowel shank (12) sub-divided into segments by longitudinal slots (26), and having a screw insertion hole (20, 28) in the dowel neck and in the dowel shank, and where an axially supported screw is adapted to be tightened into the dowel foot in order to brace the dowel foot (14) relative to the dowel neck (10) accompanied by buckling or straddling of the segments,
characterised in that located in the dowel foot (14) is an insert body (30) which has a screw thread (34; 36) for tightening the screw.

2. Plastics dowel according to claim 1, characterised in that the insert body (30) consists of a more resistant material relative to the plastics material of the dowel.

3. Plastics dowel according to claims 1 and 2, characterised in that the insert body (30) is made of metal.

4. Plastics dowel according to claims 1 and 2, characterised in that the insert body (30) is made of fibre-reinforced plastics.

5. Plastics dowel according to any one of claims 1 to 4, characterised in that the insert body is injection-moulded at the time the dowel is manufactured.

6. Plastics dowel according to any one of claims 1 to 5, characterised in that on its exterior the insert body (30) carries anchoring extension pieces (32).

7. Plastics dowel according to claim 6, characterised in that the anchoring extension pieces are in the form of fins (32) which extend around the circumference and between which extend circumferential grooves.

8. Plastics dowel according to claim 6, characterised in that the exterior of the insert body carries axially extending fins to prevent rotation.

9. Plastics dowel according to any one of claims 1 to 8, characterised in that the insert body (30) is a cylindrical construction.

10. Plastics dowel according to any one of claims 1 to 8, characterised in that the insert body is a conical construction, with the tip of the cone pointing towards the dowel neck.

11. Plastics dowel according to any one of claims 1 to 8, characterised in that the insert body is constructed as an annular disc.

12. Plastics dowel according to claim 11, characterised in that a plurality of annular discs are injection-moulded in the dowel foot at an axial distance from one another.

13. Plastics dowel according to claim 1, characterised in that insert body (30) features two different internal threads (34, 36) superimposed on one another.

14. Plastics dowel according to claim 13, characterised in that the insert body (30) features a machine thread (30) and a particle board thread.

15. Plastics dowel according to claim 13, characterised in that the insert body (30) features a machine thread (34) and a wood screw thread (36).

16. Plastics dowel according to any one of claims 1 to 8, characterised in that the insert body has a polygonal cross-section.

## Revendications

1. Cheville en matière plastique comprenant une partie distale (14), une partie proximale (10) et un fût de cheville (12) subdivisé en segments par des fentes longitudinales (26), une vis prenant appui axialement pouvant être vissée dans la partie distale de la cheville pour serrer la partie distale (14) contre la partie proximale (10) en provoquant un flambage ou une épansion des segments, caractérisée par le fait qu'un insert (30) qui présente un filet (34 ; 36) pour le vissage de la vis est immobilisé dans la partie distale (14) de la cheville.

2. Cheville en matière plastique suivant la revendication 1, caractérisée par le fait que l'insert (30) est constitué par un matériau plus résistant que la matière plastique de la cheville.

3. Cheville en matière plastique suivant les revendications 1 et 2, caractérisée par le fait que l'insert (30) est constitué par un métal.

4. Cheville en matière plastique suivant les revendications 1 et 2, caractérisée par le fait que l'insert (30) est constitué par une matière plastique renforcée de fibres.

5. Cheville en matière plastique suivant l'une des revendications 1 à 4, caractérisée par le fait que l'insert est noyé de moulage dans la cheville.

6. Cheville en matière plastique suivant l'une des revendications 1 à 5, caractérisée par le fait que l'insert (30) comporte des saillies d'ancrage (32) sur son côté extérieur.

7. Cheville en matière plastique suivant la revendication 6, caractérisée par le fait que les saillies d'ancrage sont constituées par des nervures (32) s'étendant dans la direction circonférentielle, entre lesquelles se trouvent des rainures circonférentielles.

8. Cheville en matière plastique suivant la revendication 6, caractérisée par le fait que l'insert comporte, sur son côté extérieur, des nervures axiales assurant l'immobilisation angulaire de l'insert dans la partie distale de la cheville.

9. Cheville en matière plastique suivant l'une des revendications 1 à 8, caractérisée par le fait que l'insert (30) présente une forme cylindrique.

10. Cheville en matière plastique suivant l'une des revendications 1 à 8, caractérisée par le fait que l'insert est conique, la pointe du cône étant tournée vers la partie proximale de la cheville.

11. Cheville en matière plastique suivant l'une des revendications 1 à 8, caractérisée par le fait que l'insert est réalisé sous la forme d'une rondelle annulaire.

12. Cheville en matière plastique suivant la revendication 11, caractérisée par le fait que plusieurs rondelles sont noyées de moulage à distance axiale les unes des autres dans la partie distale de la cheville.

13. Cheville en matière plastique suivant la revendication 1, caractérisée par le fait que l'insert (30) présente deux filets intérieurs (34, 36) différents, superposés.

14. Cheville en matière plastique suivant la revendication 13, caractérisée par le fait que l'insert (30) présente un filet de vis à métaux (34) et un filet de vis pour panneaux de particules.

15. Cheville en matière plastique suivant la revendication 13, caractérisée par le fait que l'insert (30) présente un filet de vis à métaux (34) et un filet de vis à bois (36).

16. Cheville en matière plastique suivant l'une des revendications 1 à 8, caractérisée par le fait que l'insert présente un profil polygonal.
